# EUROPÄISCHE PATENTSCHRIFT

(11) **EP 1 626 470 B1**
(45) Veröffentlichungstag und Bekanntmachung des Hinweises auf die Patenterteilung: **13.04.2016**
(21) Anmeldenummer: 05017382.2
(22) Anmeldetag: 10.08.2005
(51) Int. Cl.: B64D 11/06, B64C 1/20

(54) **Stromverteilungssystem zur elektrischen Versorgung von schienenmontierten Einbauten in einem Flugzeug**
Current distribution system for electric supply of rail-mounted installations in an aircraft
Système pour la distribution de courant à une installation monté sur un rail dans un avion

(30) Priorität: 12.08.2004 DE 102004039189; 12.08.2004 US 600922 P
(43) Veröffentlichungstag der Anmeldung: 15.02.2006
(73) Patentinhaber: Airbus Operations GmbH, 21129 Hamburg (FR)
(72) Erfinder: Hueber, Stefan, 21683 Stade (DE)
(74) Vertreter: Kopf Westenberger Wachenhausen Patentanwälte PartG mbB

(56) Entgegenhaltungen:
- EP-A2- 0 260 726
- DE-A1- 19 851 392
- GB-A- 2 314 012
- US-A- 4 708 549
- US-A1- 2003 132 346

## Beschreibung

Die vorliegende Erfindung betrifft die Stromverteilung in einem Flugzeug. Insbesondere betrifft die vorliegende Erfindung ein Stromverteilungssystem zur elektrischen Versorgung von einem schienenmontierten Monument in einem Flugzeug, eine Sitzschiene, einen Verriegelungsbolzen, einen Klemmbeschlag sowie Verfahren zum Montieren und Demontieren von einem schienenmontierten Monument in einem Flugzeug.

Beim Flugzeugbau muss auf eine leichte Bauweise geachtet werden. Jedes Element, das ohne Nutzen beim Fliegen mitgeführt wird, bedeutet einen erhöhten Kraftstoffverbrauch und zusätzlichen Platzbedarf. Deshalb ist man bestrebt, Komfortmerkmale und Dienste, die man einem Fluggast bieten möchte, mit einem möglichst geringen Gewichts- und Platzbedarf zu vollbringen. Zu solchen Komfortmerkmalen zählen beispielsweise die Beleuchtung oder die Unterhaltungsmedien am Sitzplatz der Flugpassagiere. Aber auch das Zubereiten von Speisen für die Passagiere in der Bordküche. Die Bereitstellung dieser Art von Komfort ist meist mit dem Bereitstellen von Elektrizität an dem Standort des Verbrauchers verbunden. Die Elektrizität wird in einem Flugzeug allerdings nur an einer zentralen Stelle bereitgestellt und muss deshalb von dort an den jeweiligen Verbraucher verteilt werden.

Der Boden eines Flugzeuges besteht aus Metallstreben, die an einem Rumpf befestigt und mit Bodenplatten überdeckt sind. Da die Bodenplatten alleine oft nicht die nötige Stabilität aufweisen lassen sich Monumente, wie beispielsweise Sitze, Küchen oder Toiletten, die eine feste Verbindung mit dem Untergrund benötigen, nicht an beliebigen Stellen auf dem Flugzeugboden anbringen. Folglich sind in dem Flugzeugboden für die Montage von Monumenten, die eine hohe Stabilität benötigen, speziell ausgebildete Sitzschienen vorgesehen. An diesen Sitzschienen werden die Monumente angebracht und sind somit ausreichend stabilisiert.

Wird an einem Monument Elektrizität benötigt, müssen heute von der zentralen Stromversorgung im Flugzeug meist Kabel zum Verbraucher verlegt werden. Diese Kabel sollen nicht sichtbar in Erscheinung treten, weshalb sie meist nicht auf dem direkten und kürzesten Weg verlegt werden können, sondern erst mühsam hinter einer Verkleidung versteckt werden müssen. Deshalb und auch weil oft die Lage der Anschlusspunkte an den Monumenten nicht eindeutig bestimmt ist, entstehen in der Praxis oft "Längenreserven", die ein erhöhtes Gewicht und einen erhöhten Platzbedarf zur Folge haben. Außerdem sind Steckverbindungen vorhanden, die zu Störungen führten können und die oft schwer erreichbar sind, weshalb ihr Ausbau ggf. die Reparaturdauer erhöht. Es kann auch vorkommen, dass beim Ausbau der Monumente vergessen wird die Steckverbindung zu lösen. Dadurch können die Steckverbindungen abreißen und die Dauer für eine dann nötige Reparatur wird erhöht.

Das Dokument EP 0 260 726 A2 betrifft ein Passagierunterhaltungssystem mit direkt angekoppelten Sitzempfängern, die über eine Sitzschienenübertragungsleitung die Unterhaltungsleistungs- und Informationssignale empfangen.

Das Dokument GB 2 314 012 A beschreibt einen abnehmbaren Fahrzeugsitz mit einer Sitzbasis, einer Sitzrückenlehne und einem Fuß, der einen T-förmigen Zapfen aufweist, wobei der T-förmige Zapfen durch ein Loch in einem Kanal der Sitzbasis geführt wird, die an dem Fahrzeug befestigt ist, und wobei der Sitz mit einem gefederten Stempel in einem weiteren Loch einrastet.

Die Druckschrift US 4 708 549 A beschreibt einen Dübel zum Sichern einer Last an einer geschlitzten Halteschiene.

Die Druckschrift DE 198 51 392 A1 betrifft eine Vorrichtung zum zeitweiligen Verbinden eines bewegbaren Gegenstandes mit einer Halteschiene.

Die Druckschrift US 2003/132346 A1 beschreibt eine Passagierschnittstelleneinheit, die an dem Boden eines Flugzeugs angebracht ist und Kabel aufweist, die über einen Ausschnitt aus der Passagierschnittstelleneinheit austreten und in einer Sitzschiene zwischen der Sitzschiene und einer Abdeckung geführt werden bis sie einen Passagiersitz erreichen.

Es ist eine Aufgabe der vorliegenden Erfindung ein verbessertes Stromverteilungssystem zur elektrischen Versorgung von z.B. schienenmontierten Monumenten zur Verfügung zu stellen.

Der Gegenstand der Erfindung ist in den unabhängigen Patentansprüchen angegeben. Weitere Ausführungsbeispiele sind den abhängigen Patentansprüchen zu entnehmen.

Beispielsweise wird ein Stromverteilungssystem zur elektrischen Versorgung von einem schienenmontierten Monument in einem Flugzeug angegeben. Das Stromverteilungssystem umfasst eine Sitzschiene, einen Verriegelungsbolzen und einen Klemmbeschlag. Dabei umfasst die Sitzschiene einen ersten Stromleiter, der eine Isolierung aufweist. Die Isolierung ist zwischen dem erstem Stromleiter und der Montageschiene angeordnet. Der Klemmbeschlag ist so ausgebildet, dass er mittels des Verriegelungsbolzens an der Sitzschiene befestigt wird. Der Verriegelungsbolzen umfasst dabei einen zweiten Stromleiter, wobei der zweite Stromleiter so ausgebildet ist, dass er mit dem ersten Stromleiter in Kontakt treten kann.

In vorteilhafter Art und Weise kann in der Sitzschiene und insbesondere in dem ersten Stromleiter ein elektrisches Potential gegenüber der Umgebung aufgebaut werden. Dieses elektrische Potential kann mittels des zweiten Stromleiters an einer beliebigen Stelle der Sitzschiene abgegriffen werden. Der zweite Stromleiter kann mit dem Verriegelungsbolzen und dem Klemmbeschlag an der Sitzschiene in einer bestimmten Position befestigt und gegen Verrutschen gesichert werden. Diese Befestigungsposition kann über die gesamte Länge der Sitzschiene im Abstand eines Zollraster gewählt werden. Somit ist es möglich, eine bestimmte Stelle entlang der Sitzschiene mit einem Potential zu versorgen, ohne dass ein Kabel an diese Stelle gelegt werden muss. Um die Position mit dem Potential zu versorgen, müssen keine Überlängen berechnet werden, die ein unnötiges Gewicht und einen unnötigen Platzbedarf bedeuten würden. Die Integration des ersten Stromleiters in die für Montagezwecke bereits vorhandene Sitzschiene kann den Platzbedarf verbessern. Außerdem kann bei der Montage Zeit gespart werden, da keine Kabellängen berechnet werden müssen. Änderungen der Montageposition sind gegenüber Kabeln leichter möglich, da keine Kabel neu verlegt werden müssen. Somit kann die Flexibilität erhöht werden.

Gemäß einem Beispiel ist der Verriegelungsbolzen ausgebildet, ein Monument an der Sitzschiene anzubringen. In vorteilhafter Art und Weise kann somit ein Monument an der Sitzschiene angebracht werden und gegen Bewegung gesichert werden und gleichzeitig kann das Monument über den zweiten Stromleiter des Verriegelungsbolzens mit einem Potential versorgt werden.

Zum Beispiel weist der erste Stromleiter eine Oberfläche auf, die von der Isolierung umhüllt wird.

In vorteilhafter Art und Weise wird ein in dem ersten Stromleiter aufgebrachtes Potential gegenüber seiner Umgebung isoliert. Es kann somit verhindert werden, dass ein ungewollter Kontakt mit einem auf einem anderen Potential liegenden Leiter stattfinden kann. Der Kontakt mit einem anderen Leiter könnte zu einem Kurzschluss führen. Ein weiterer Vorteil der Umhüllung der Oberfläche des ersten Stromleiters mit einer Isolierung ist, dass dadurch verhindert werden kann, dass Passagiere mit dem Potential des ersten Stromleiters in Berührung kommen und gesundheitliche Gefährdungen durch einen Stromschlag davontragen.

In einem Beispiel kann der zweite Stromleiter ein erstes Ende aufweisen, das als Spitze ausgebildet ist. Dabei ist die Spitze derart ausgebildet, dass sie die Isolierung des ersten Stromleiters durchdringen kann und dass die Spitze über ein zweites Ende des Verriegelungsbolzens hinausragt.

Bei der Befestigung des Monuments an der Sitzschiene wird der Verriegelungsbolzen mit der herausragenden Spitze gegen die Isolierung des ersten Leiters gedrückt. Der Druck kann zu einem Durchdringen der Spitze durch die Isolierung des ersten Leiters führen. Dadurch können sich der erste und der zweite Stromleiter berühren, wodurch sich eine leitende Verbindung ergeben kann. Der zweite Leiter erhält dadurch das selbe Potential wie der erste Leiter, das zur Stromversorgung eines Verbrauchers, z. B. in einem Monument, benutzt werden kann. Zur Stromversorgung muss der Verbraucher noch mit einem weiteren Potential, wie es beispielsweise ein dritter Stromleiter, aufweisen kann, verbunden werden. Der dritte Stromleiter könnte beispielsweise der Leiter einer weiteren Sitzschiene gemäß der vorliegenden Erfindung sein. Die Vorteile einer solchen Anordnung sind, dass beispielsweise Monumente, die auf diese Weise eingebaut werden, sofort mit dem Stromnetz verbunden sein können. Da für die Stromversorgung keine neuen Kabel nötig sind, erhöht eine solche Anordnung die Flexibilität, beispielsweise bei Kabinenumbauten. Eine solche Anordnung kann ebenfalls störanfällige Steckerverbindungen überflüssig machen. Störungen durch das Reißen von Kabeln, z. B. beim Ausbau von Monumenten, können ebenfalls vermieden werden.

Beispielsweise kann der zweite Stromleiter ein drittes Ende aufweisen, das ausgebildet ist, um einen Verbraucher anzuschließen. Beispielsweise kann ein Kontaktstift (Jiffy) vorhanden sein, an dem ein Anschlusskabel eines Verbrauchers angeschlossen werden kann.

In vorteilhafter Art und Weise kann somit der Anschluss eines Verbrauchers an den zweiten Stromleiter standardisiert werden. Durch die Verwendung von Standardbauteilen ist es möglich, eine billigere Herstellung der Bauteile zu gewährleisten und den Einbau der Bauteile zu beschleunigen, da keine individuellen Anpassungen nötig sind.

In einem Beispiel wird eine Sitzschiene angegeben, die einen ersten Stromleiter umfasst, der eine Isolierung aufweist. Dabei kann die Isolierung zwischen erstem Stromleiter und Sitzschiene angeordnet sein. In vorteilhafter Art und Weise kann der erste Stromleiter ein anderes Potential als die Umgebung, insbesondere die Sitzschiene, aufweisen. Daher kann der integrierte erste Leiter zur Spannungsversorgung eines Verbrauchers verwendet werden.

Ferner kann ein Klemmbeschlag vorgesehen werden, der so ausgebildet ist, dass er sich bei der Befestigung mittels eines Verriegelungsbolzens an einer Sitzschiene verklemmen kann. Da sich der Klemmbeschlag und die Sitzschiene miteinander verklemmen, entstehen vorteilhaft Reibungskräfte zwischen dem Klemmbeschlag und der Sitzschiene, die verhindern, dass sich der Klemmbeschlag auf der Sitzschiene bewegt. Dadurch kann ein mittels des Verriegelungsbolzens befestigtes Monument stabilisiert werden.

Beispielweise ist der Klemmbeschlag ausgebildet, den Verriegelungsbolzen über einen ersten Stromleiter zu positionieren.

Der Verriegelungsbolzen kann einen zweiten Stromleiter aufweisen, dessen erstes Ende als Spitze ausgebildet ist, um mit dem ersten Stromleiter in Kontakt zu kommen. Die Positionierung des Verriegelungsbolzens über den ersten Stromleiter kann das Treffen des ersten Stromleiters mit der Spitze des zweiten Stromleiters erleichtern.

Ferner kann ein Verfahren zum Montieren von Monumenten an einem Stromverteilungssystem zur elektrischen Versorgung von schienenmontierten Monumenten in einem Flugzeug angegeben werden. Dabei wird der Klemmbeschlag an der Montageposition eines Monuments in einer Sitzschiene positioniert. Nachdem das Monument mit dem Klemmbeschlag mittels Verriegelungsbolzens verbunden worden ist, wird das Monument an der Sitzschiene mittels Klemmbeschlag und Verriegelungsbolzen angebracht. Es erfolgt dann ein Verklemmen des Klemmbeschlags mit der Sitzschiene, wobei die Isolierung eines ersten Stromleiters mit einer Spitze eines zweiten Stromleiters durchstoßen wird. Dadurch kann der erste Stromleiter den zweiten Stromleiter kontaktieren und an den zweiten Stromleiter kann anschließend ein Verbraucher angeschlossen werden, der dann mit einem dritten Stromleiter verbunden werden kann.

In vorteilhafter Art und Weise kann mittels dieses Verfahrens eine kabellose Stromversorgung eines Verbrauchers in einem Monument hergestellt werden. Die Verwendung von Kabeln kann dadurch vermieden werden.

Ferner kann ein Verfahren zum Demontieren von Monumenten von einem Stromverteilungssystem angegeben werden. Zunächst wird die Verbindung des Verriegelungsbolzens mit dem Klemmbeschlag gelöst. Dadurch kann der erste Stromleiter von dem zweiten Stromleiter getrennt werden. Danach kann die Trennung des Monuments vom Klemmbeschlag und Verbindungsbolzen erfolgen. Darauf wird das von der Spitze des zweiten Leiters in der Isolierung erzeugte Loch mit Isoliermaterial verfüllt.

In vorteilhafter Art und Weise kann somit ein flexibler Kabinenumbau stattfinden und das Stromverteilungssystem kann weiter verwendet werden.

Im Folgenden werden Ausführungsbeispiele der vorliegenden Erfindung mit Verweis auf die folgenden Figuren detailliert beschrieben.
Fig. 1 zeigt eine prinzipielle Schnittansicht eines Stromverteilungssystems gemäß einem Ausführungsbeispiel der vorliegenden Erfindung.
Fig. 2 zeigt eine Detailschnittansicht der Verbindung zweier Stromleiter gemäß einem vorteilhaften Ausführungsbeispiel der vorliegenden Erfindung.
Fig. 3 zeigt eine prinzipielle Ansicht eines Aufbaus eines Stromkreises gemäß einem vorteilhaften Ausführungsbeispiel der vorliegenden Erfindung.
Fig. 4 zeigt ein Flussdiagramm eines Verfahrens zum Montieren eines Monuments an einem Stromverteilungssystem gemäß einem Ausführungsbeispiel der vorliegenden Erfindung.
Fig. 5 zeigt ein Flussdiagramm eines Verfahrens zum Demontieren eines Monuments von einem Stromverteilungssystem gemäß einem Ausführungsbeispiel der vorliegenden Erfindung.

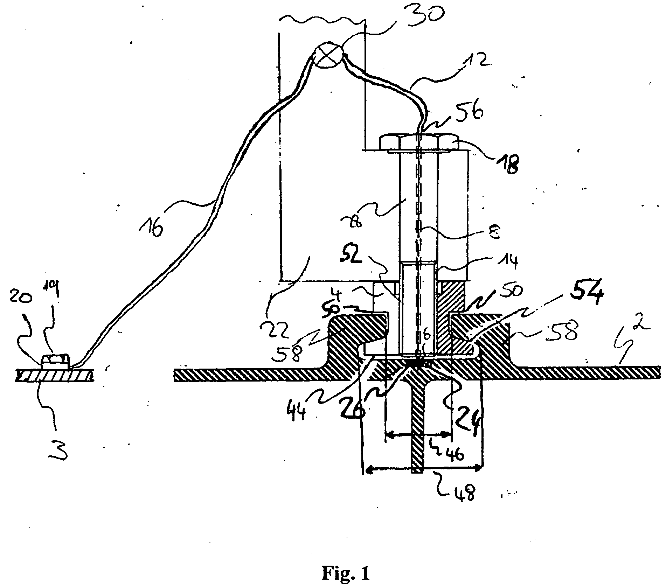

Fig. 1 zeigt eine prinzipielle Schnittansicht eines Stromverteilungssystems gemäß einem Ausführungsbeispiel der vorliegenden Erfindung. Das Bild zeigt, wie ein Monument 22 mittels eines Verriegelungsbolzens 28 und eines Klemmbeschlags 4 an einer Sitzschiene 2 befestigt wird. Die Sitzschiene 2 weist ein T-förmiges Profil auf. Dieses T-förmige Profil erhöht die Stabilität der Sitzschiene 2 und gibt ihr ausreichend Verbindungsfestigkeit, um an ihr eine Vielzahl von Monumenten 22 anbringen zu können. An ihrer Oberfläche weist die Sitzschiene 2 mittig symmetrische hakenförmige Erhebungen 58 auf, die sich über die gesamte Länge der Sitzschiene, die in die Zeichenebene weist, erstrecken. Die hakenförmigen Erhebungen 58 der Sitzschiene 2 definieren einen T-förmigen Spalt, der ein erstes Ausmaß 48 und ein zweites Ausmaß 46 aufweist, wobei das erste Ausmaß 48 größer als das zweite Ausmaß 46 ist. Der Klemmbeschlag 4 weist eine rechteckige Querschnittsfläche auf. Die rechteckige Querschnittsfläche ist an ihren Seiten symmetrisch durch die Einkerbung 50 unterbrochen. Dadurch weist die Seite der Grundfläche 44 des Klemmbeschlags 4, die in der Schnittebene liegt, ein Ausmaß auf, das größer als das Ausmaß des Klemmbeschlags an der Einkerbung 50 ist. Die Anordnung der Kerbe 50 ist so gewählt, dass sie mit den hakenförmigen Erhebungen 58 der Sitzschiene 2 so zusammenwirkt, dass auf der Sitzschiene 2 eine Bewegung des Klemmbeschlags 4 in Längsrichtung möglich ist. Eine Bewegung seitlich und vertikal von der Oberfläche der Sitzschiene 2 wird durch die hakenförmige Erhebungen 58 unterbunden. Der Klemmbeschlag 4 kann somit nur entlang der Schiene 2 in die Zeichenebene hinein und aus ihr heraus bewegt werden, ein Abweichen von dieser linearen Bewegung ist nur schwer möglich. Die Bewegung in Längsrichtung wird ermöglicht, da die Einkerbung 50 ein etwas größeres Ausmaß aufweist als der hakenförmige Teil der Erhebung 58 der Sitzschiene 2, der mit der Kerbe in Eingriff geht. Der Klemmbeschlag kann beispielsweise im Zollraster-Maß auf der Sitzschiene 2 positioniert werden. Dazu können in der Sitzschiene 2 Ausnehmungen 62 in der Größe der Grundfläche 44 des Klemmbeschlags vorhanden sein, durch die der Klemmbeschlag 4 an dieser Stelle in die Sitzschiene 2 eingeführt werden kann. An diesen Stellen sind die hakenförmigen Fortsätze der Erhebung 58 der Sitzschiene 2 entfernt.

Mittig an der Oberfläche der Sitzschiene 2 ist in einem Abstand von der Grundfläche 44 des Klemmbeschlags 4 der Stromleiter 24 angeordnet. Der Stromleiter 24 besitzt rechteckigen Querschnitt und ist entlang der Sitzschiene 2 parallel zu den Erhebungen 58 angeordnet. Der Stromleiter 24 ist aus elektrisch leitfähigem Material, beispielsweise aus Kupfer hergestellt. Dadurch wird die Leitung von elektrischem Strom ermöglicht. Der Leiter 24 ist von einer isolierenden Schicht 26 umgeben, wodurch eine elektrische Trennung des Stromleiters 24 von der Sitzschiene 2 erreicht werden kann. Bei Berührung des Stromleiter 24 mit einem anderen Potential könnte sonst ein Potentialausgleich stattfinden und der Verbraucher würde wegen des entstandenen Kurzschluss nicht mehr mit Strom versorgt werden. Die Isolierung 26 umgibt die gesamte Oberfläche des Leiters 24 und erlaubt es, auf dem Leiter 24 einen Potentialunterschied gegenüber der Umgebung aufzubauen. Zusammen mit der Isolierung 26 ist der Stromleiter 24 so in der Sitzschiene 2 angeordnet, dass die Oberfläche der Isolierung 26 auf der selben Ebene wie die Oberfläche der Sitzschiene 2 liegt. Dadurch ist der Kupferleiter 24 hinter der Isolierung 26 verborgen und wird vor einem versehentlichen Berühren des Stromleiters 24, der ein elektrisches Potential aufweisen kann, geschützt. So kann die Sicherheit der Passagiere erhöht werden. Der Stromleiter 24 weist wegen seiner rechteckigen Ausgestaltung vier Begrenzungsflächen auf, von denen je zwei die gleiche Breite aufweisen. Zwei Ebenen sind breiter als die beiden anderen. Es ist vorteilhaft, den Stromleiter und seine Isolierung so anzuordnen, dass sich an der Oberfläche der Sitzschiene 2 eine der breiteren Begrenzungsflächen des Stromleiters befindet. Ein Stromleiter 24 und eine Isolierung 26 können auch in bestehende Sitzschienen 2, beispielsweise durch Fräsung, eingebracht werden. Ein Nachrüsten bereits vorhandener Sitzschienen kann damit ermöglicht werden.

Senkrecht zu der Grundfläche 44 des Klemmbeschlags 4 ist mittig ein Gewinde 52 angeordnet, das mit dem Gewinde 14 eines Verriegelungsbolzens 28, der in Fig. 1 als Schraube ausgebildet ist, in Eingriff geht. Der Verriegelungsbolzen 28 weist eine Länge auf, wobei eine Hälfte der Länge mit einem Gewinde 14 ausgebildet ist. Die Länge des Gewindes 14 übersteigt die Höhe des Klemmbeschlags 4. Zur Erleichterung des Eindrehens ist der Kopf 18 des Verriegelungsbolzens als Sechskant ausgebildet. Dadurch kann der Verriegelungsbolzen 28 beispielsweise mit einem Standard Gabelschlüssel bedient werden. Beim Eindrehen des Verriegelungsbolzens 28 in das Gewinde 52 bewegt sich der Verriegelungsbolzen 28 in die Richtung der Oberfläche der Sitzschiene 2. Zwischen dem Kopf 18 des Verriegelungsbolzen und dem Klemmbeschlag 4 weist der Verriegelungsbolzen 28 eine erste Länge auf. Durch Eindrehen des Verriegelungsbolzen 28 in den Klemmbeschlag 4 mittels der Gewinde 52 und 14 wird diese erste Länge verkürzt. Diese Verkürzung kann dazu verwendet werden, ein Monument 22 zwischen Klemmbeschlag 4 und Kopf 18 des Verriegelungsbolzens einzuklemmen und zu fixieren. Zum Schutz des Monuments kann zwischen Kopf 18 des Verriegelungsbolzens und Monument 22 eine Unterlegscheibe eingesetzt werden.

An dem den Kopf 18 des Verriegelungsbolzens gegenüberliegenden Ende des Verriegelungsbolzens 28 ist eine Spitze 6 ausgebildet. Diese bewegt sich bei Verriegelung in die Richtung der Oberfläche der Sitzschiene 2 und insbesondere in die Richtung der Isolierung 26 des Stromleiters 24. Es kommt schließlich zur Berührung der Spitze 6 mit der Isolierung 26. Wird der Verriegelungsbolzen 28 weiter gegen die Oberfläche der Sitzschiene 2 bewegt, durchbohrt schließlich die Spitze 6 die Isolierung 26 und tritt mit dem darunterliegenden Stromleiter 24 in Kontakt. Zur besseren Justierbarkeit des Verriegelungsbolzens 28 könnte die Spitze 6 auch auf einer Feder gelagert sein, so dass die Distanz zwischen Verriegelungsbolzen 28 und Stromleiter 24 feiner eingestellt werden kann.

Die Spitze 6 ist der Fortsatz eines zweiten elektrischen Leiters 8, der von dem Verriegelungsbolzen 28 umfasst wird. Da Stromleiter 24 und die Spitze 6 jeweils aus leitfähigem Material hergestellt sind, kann ein Potentialausgleich zwischen beiden stattfinden.

Durch die Bewegung des Verriegelungsbolzens 28 Richtung Oberfläche der Sitzschiene 2 und des Anstoßens an dem Leiter 24, wird der Klemmbeschlag 4 weg von der Oberfläche der Sitzschiene 2 an die Unterseite 54 der hakenförmigen Erhebungen 58 der Sitzschiene 2 gepresst. Dadurch entstehen Reibungskräfte zwischen Klemmbeschlag 4 und Sitzschiene 2, die verhindern, dass sich der Klemmbeschlag 4 in Längsrichtung der Sitzschiene 2 bewegt. Somit ist ein, mittels Verriegelungsbolzen 28 befestigtes Monument 22 fixiert.

Die Spitze 6 des Kupferkerns 8 ragt an dem, den Kopf 18 gegenüberliegenden Ende des Verriegelungsbolzens 28, z.B. 1,5 mm aus dem Verriegelungsbolzen 28 heraus. An der Seite des Kopfes 18 ist an dem Kupferkern 8 ein Kontaktstift 56 ausgebildet, der leitend mit dem Kupferkern 8 des Verriegelungsbolzens 28 verbunden ist. An dem Kontaktstift 56 kann fest oder mittels Steckverbinder ein Stromleiter 12, der mit einem Verbraucher 30 verbunden ist, angeschlossen sein. Der Verbraucher 30 ist Teil des Monuments 22. Durch den festen Einbau des Verbrauchers 30 im Monument 22 lässt sich die Verkabelung 12 ebenfalls fest vorbereiten, so dass bei Montage nur noch eine Verbindung mit dem Kontaktstift 56 hergestellt werden muss. Dadurch wird die Montage beschleunigt und es müssen keine Kabel aufwendig von der Stromquelle zum Verbraucher 30 verlegt werden. Von dem Verbraucher 30 weg führt der Stromleiter 16, der mit einem zweiten Potential, beispielsweise über einen Kabelschuh 20 und eine Schraube 19, mit einem dritten Stromleiter 3, verbunden ist. Somit kann ein Stromkreis beispielsweise von einer Batterie 40 über Stromleiter 24 über Spitze 6 und Kupferkern 8 über Kontaktstift 56 und Verbindungskabel 12 zum Verbraucher 30 und über Kabel 16, Kabelschuh 20 und dritten Stromleiter 3 wieder zurück zu der Batterie 40 geschlossen werden. Es wäre auch denkbar, dass für die Rückleitung zur Batterie 40 über Kabel 16 ein weiterer Stromleiter 24 einer anderen Sitzschiene 2 verwendet wird. Unter Verwendung des in eine Sitzschiene 2 angeordneten Stromleiter 24 lässt sich in einem Flugzeug schnell und flexibel ein Verbraucher 30 an eine Spannungsquelle 40 anschließen. Das Monument 22 kann dadurch schnell mit dem Stromnetz 40 verbunden werden.

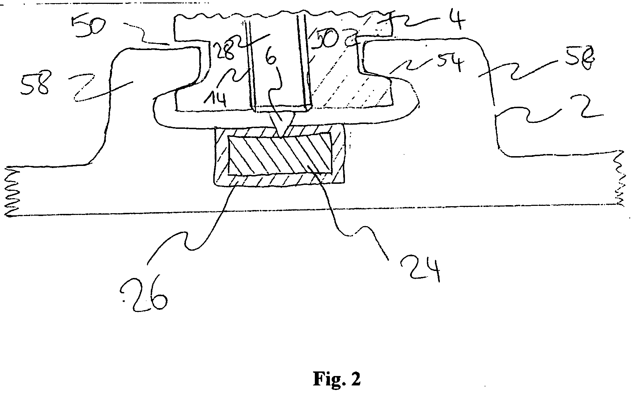

Fig. 2 zeigt eine Detailschnittansicht der Verbindung zweier Stromleiter 6, 24 gemäß einem vorteilhaften Ausführungsbeispiel der vorliegenden Erfindung. Fig. 2 zeigt, wie Fig. 1, die Sitzschiene 2, den Verriegelungsbolzen 28 mit der Spitze 6, der sich mittels Gewinde 14 in dem Klemmbeschlag 4 bewegen kann. In Fig. 2 ist der Verriegelungsbolzen 28 so weit in den Klemmbeschlag 4 eingedreht, dass sich die Spitze 6 durch die Isolierung 26 gebohrt hat und einen Kontakt mit dem Stromleiter 24 herstellt. Die Dicke der Isolierung 26 ist geringer als die Länge der Spitze 6. Durch den Druck, der die Spitze 6 gegen den Stromleiter 24 drückt, wird über das Gewinde 14 ein Druck auf den Klemmbeschlag 4 ausgeübt, der den Klemmbeschlag 4 von der Oberfläche der Sitzschiene 2 wegbewegt. Die hakenförmigen Erhebungen 58 der Sitzschiene 2 gehen mit der Kerbe 50 des Klemmbeschlags 4 in Eingriff. Durch den Druck, der den Klemmbeschlag 4 von der Oberfläche der Sitzschiene 2 wegbewegt, wird eine Seite der Kerbe 50 gegen die Unterseite 54 der hakenförmigen Erhebung 58 der Sitzschiene 2 gepresst. Dadurch entstehen Reibungskräfte, die ein Bewegen des Klemmbeschlags 4 parallel zu der Sitzschiene 2 verhindern.

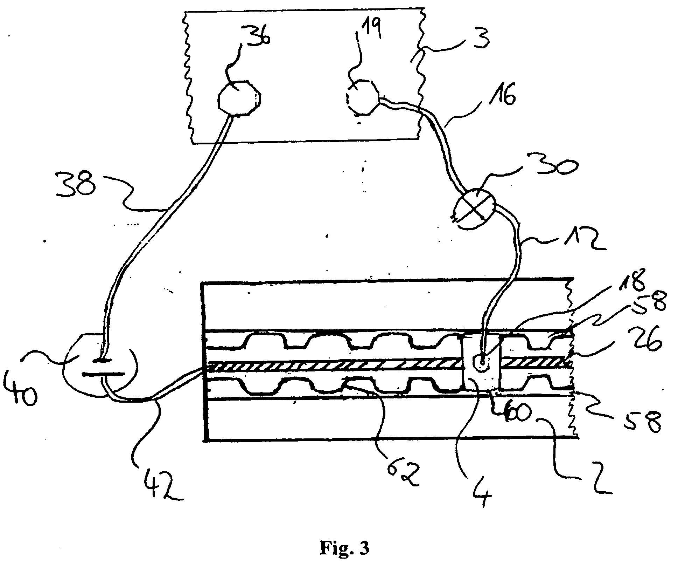

Fig. 3 zeigt eine prinzipielle Ansicht eines Aufbaus eines Stromkreises gemäß einem vorteilhaften Ausführungsbeispiel der vorliegenden Erfindung. Fig. 3 zeigt einen Ausschnitt der Sitzschiene 2. Die hakenförmigen Erhebungen 58 der Sitzschiene 2 bilden eine Führung für den Klemmbeschlag 4. Wenn der Verriegelungsbolzen 28 nicht auf die Oberfläche der Sitzschiene 2 drückt, lässt sich der Klemmbeschlag 4 parallel zu den hakenförmigen Erhebungen 58 der Sitzschiene bewegen. Unterbrechungen 62 der hakenförmigen Erhebungen 58, deren Breiten größer als die Breite 60 des Klemmbeschlags 4 sind, ermöglichen das Ein- und Ausbringen des Klemmbeschlags 4 in die Sitzschiene 2 ohne den Klemmbeschlag 4 über die gesamte Länge der Sitzschiene 2 führen zu müssen. Die Unterbrechungen 62 können gemäß des Zollrasters angeordnet sein.

Nach dem Fixieren des Klemmbeschlags 4 mittels Verriegelungsbolzen 28 auf der Sitzschiene 2 wird über die Spitze 6, den Kupferkern 8 und dem Kontaktstift 56 ein Kontakt zwischen der Zuleitung 12 zu dem Verbraucher 30 und dem Stromleiter 24, der sich unter der Isolierung 26 befindet, hergestellt. Der Stromleiter 24 ist über eine Zuführungsleitung 42 mit einem Potential einer Stromversorgung 40 verbunden. Somit haben Zuführungsleitung 42, Stromleiter 24, Kern des Verriegelungsbolzens 8 und Zuleitung zum Verbraucher 12 das selbe Potential. Die Zuführungsleitung 12 ist mit dem Verbraucher 30 verbunden. Von diesem führt eine Leitung 16 auf einen Kabelschuh 20, der mit der Schraube 19 auf dem dritten Stromleiter 3 befestigt ist. Der dritte Stromleiter 3 ist aus leitfähigem Material ausgebildet und mit Schraube 36 verbunden, die wiederum über Leitung 38 mit der Stromquelle 40 verbunden ist. Somit dienen die Leitung 16, Kabelschuh 20, Schraube 19, der dritte Stromleiter 3, Schraube 36 und Leitung 38 der Abführung des Stromes von Verbraucher 30. Diese Anordnung erlaubt eine flexible Verbindung des Verbrauchers 30 mit der Stromquelle 40.

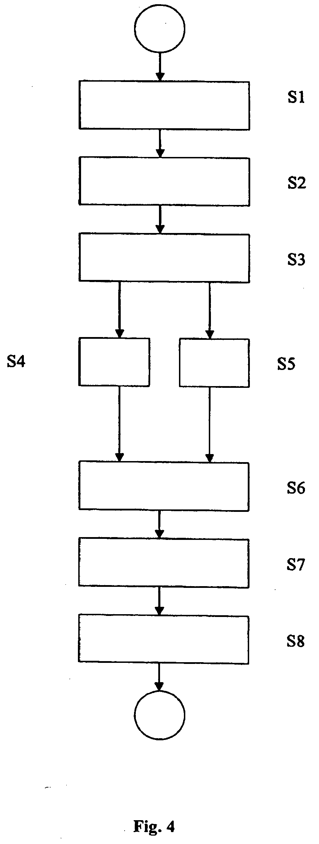

Fig. 4 zeigt das Flussdiagramm eines Verfahrens zum Montieren eines Monuments 22 an einem Stromverteilungssystem gemäß einem Ausführungsbeispiel der vorliegenden Erfindung. In einem ersten Schritt S1 wird der Klemmbeschlag 4 auf der Sitzschiene 2 an der Position, an der ein Monument 22 montiert werden soll, positioniert. Nachdem die richtige Position gefunden ist, wird in einem Schritt S2 das Monument 22 mit dem Klemmbeschlag 4 mittels Verriegelungsbolzen 28 verbunden. Im Schritt S3 wird das Monument 22 mittels Klemmbeschlag 4 und Verriegelungsbolzen 28 an der Sitzschiene 2 angebracht. Es besteht noch die Möglichkeit letztmalig die Position des Monuments 22 fein zu justieren. Durch Anziehen des Verriegelungsbolzens 8 erfolgt in Schritt S4 ein Verklemmen des Klemmbeschlags 4 mit der Sitzschiene 2. Eine Bewegung des Klemmbeschlags 4 auf der Sitzschiene 2 wird dadurch unterbunden. Beim Verklemmen erfolgt gleichzeitig in Schritt S5 das Durchstoßen der Isolierung 26 mit der Spitze 6 des zweiten Stromleiters 8, der als Kupferkern 8 des Verriegelungsbolzens 28 ausgebildet ist. Nachdem die Isolierung 26 durchstoßen ist, können der erste Stromleiter 24 und der zweite Stromleiter 8 sich gegenseitig kontaktieren, wie in S6 dargestellt. In S7 erfolgt anschließend das Verbinden des Verbrauchers 30 mit dem zweiten Stromleiter 8 über das Verbindungskabel 12. Um den Stromkreis zu schließen, wird in Schritt S8 der Verbraucher 30 über das Kabel 16 mit dem dritten Stromleiter 3, die wiederum mit der Stromquelle 40 verbunden ist, verbunden.

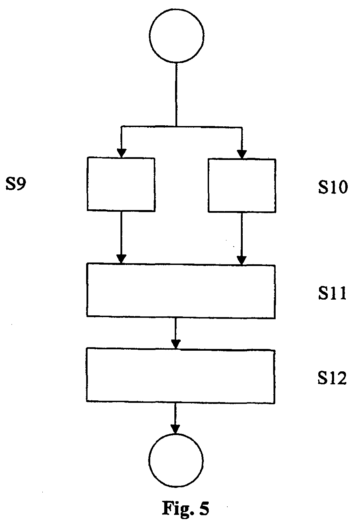

Fig. 5 zeigt ein Flussdiagramm eines Verfahrens zum Demontieren eines Monuments 22 von einem Stromverteilungssystem gemäß einem Ausführungsbeispiel der vorliegenden Erfindung. Zum Ausbauen muss in Schritt S9 die Verbindung des Verriegelungsbolzens 28 mit dem Klemmbeschlag 4 gelöst werden. Dies erfolgt durch Herausschrauben des Verriegelungsbolzens 28 aus dem Klemmbeschlag 4. In Schritt S10 wird durch das Herausdrehen des Verriegelungsbolzens 28 gleichzeitig die Verbindung des ersten Stromleiters 24 mit der Spitze 6 und dem zweiten Stromleiter 8 getrennt. Im Schritt S1 kann schließlich das Monument 22 von dem Klemmbeschlag 4 und dem Verbindungsbolzen 28 gelöst werden. Da das Durchstoßen der Isolierung 26 mit Spitze 6 ein Loch in der Isolierung 26 hinterlässt, muss dieses, um beispielsweise Kurzschlüsse zu vermeiden, im Schritt S 12 mit Isoliermaterial aufgefüllt werden.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Stromverteilungssystem zur elektrischen Versorgung von einem schienenmontierten Monument in einem Flugzeug, umfassend:
eine Sitzschiene (2);
einen Klemmbeschlag (4) mit einem Gewinde (52);
einen Verriegelungsbolzen (28) mit einem Gewinde (14) zum Eindrehen in den Klemmbeschlag (4);
wobei die Sitzschiene (2) einen ersten Stromleiter (24) umfasst;
wobei der erste Stromleiter (24) eine Isolierung (26) aufweist, die die gesamte Oberfläche des ersten Stromleiters (24) umgibt; und
wobei die Isolierung (26) zwischen ersten Stromleiter (24) und der Sitzschiene (2) angeordnet ist;
wobei der Klemmbeschlag (4) ausgebildet ist, mittels des Verriegelungsbolzens (28) an der Sitzschiene (2) durch Pressen befestigt zu werden;
wobei der Verriegelungsbolzen (28) einen zweiten Stromleiter (8) umfasst;
wobei der zweite Stromleiter (8) ausgebildet ist, um mit dem ersten Stromleiter (24) in Kontakt zu treten;
wobei der zweite Stromleiter (8) ein erstes Ende aufweist;
wobei das erste Ende als Spitze (6) ausgebildet ist;
wobei die Spitze (6) über ein zweites Ende des Verriegelungsbolzens (28) hinausragt; und
wobei die Spitze (6) ausgebildet ist, die Isolierung (26) des ersten Stromleiters (24) zu durchdringen, wenn sich die Spitze (6) bei der Befestigung in die Richtung der Isolierung (26) des ersten Stromleiters (24) bewegt.

2. Stromverteilungssystem nach Anspruch 1,
wobei der Verriegelungsbolzen (28) ausgebildet ist, ein Monument (22) an einer Sitzschiene (2) anzubringen.

3. Stromverteilungssystem nach Anspruch 1 oder 2,
wobei der zweite Stromleiter (8) ein drittes Ende aufweist;
wobei das dritte Ende (56) ausgebildet ist, einen Verbraucher anzuschließen.

4. Sitzschiene für ein Stromverteilungssystem zur elektrischen Versorgung von einem schienenmontierten Monument in einem Flugzeug nach einem der Ansprüche 1 bis 3,
wobei in die Sitzschiene (2) ein erster Stromleiter (24) integriert ist;
wobei die Sitzschiene (2) an ihrer Oberfläche symmetrische hakenförmige Erhebungen (58) aufweist;
wobei der erste Stromleiter (24) eine Isolierung (26) aufweist, die die gesamte Oberfläche des Stromleiters umgibt und die von der Spitze (6) eines zweiten Stromleiters eines Verriegelungsbolzens durchstoßbar ist, so dass der erste Stromleiter den zweiten Stromleiter kontaktieren kann, wenn die Spitze (6) durch Druck gegen den ersten Stromleiter (24) drückt;
wobei die Isolierung (26) zwischen dem ersten Stromleiter (24) und der Sitzschiene (2) angeordnet ist;
wobei der Stromleiter (24) eine rechteckige Ausgestaltung mit vier Bezugsflächen aufweist;
wobei je zwei der vier Bezugsflächen breiter als die beiden anderen sind;
wobei der Stromleiter (24) zusammen mit der Isolierung (26) so in der Sitzschiene (2) integriert ist, dass die Oberfläche der Isolierung (26) auf derselben Ebene wie die Oberfläche der Sitzschiene (2) liegt; und
wobei der Stromleiter (24) und seine Isolierung (26) so angeordnet sind, dass sich an der Oberfläche der Sitzschiene (2) eine der breiteren Begrenzungsflächen des Stromleiters (24) befindet.

5. Verriegelungsbolzen zur Befestigung eines Klemmbeschlags (4) durch Pressen, der ein Gewinde (52) aufweist, an einer Sitzschiene (2) nach Anspruch 4 oder 5, welche einen ersten Stromleiter (24) umfasst, der eine Isolierung (26) aufweist, die die gesamte Oberfläche des ersten Stromleiters (24) umgibt,
wobei der Verriegelungsbolzen (28) ein Gewinde (14) zum Eindrehen in den Klemmbeschlag (14) aufweist;
wobei der Verriegelungsbolzen (28) einen zweiten Stromleiter (8) umfasst;
wobei der zweite Stromleiter (8) ausgebildet ist, um mit einem ersten Stromleiter (24) in Kontakt zu treten;
wobei der zweite Stromleiter (8) ein erstes Ende aufweist;
wobei das erste Ende als Spitze (6) ausgebildet ist;
wobei die Spitze (6) über ein zweites Ende des Verriegelungsbolzens (28) hinausragt; und
wobei die Spitze (6) ausgebildet ist, die Isolierung (26) des ersten Stromleiters (24) zu durchdringen, wenn sich die Spitze bei Verriegelung in die Richtung der Isolierung (26) des Stromleiters (24) bewegt.

6. Verriegelungsbolzen nach Anspruch 5,
wobei der Verriegelungsbolzen (28) ausgebildet ist, ein Monument (22) an einer Sitzschiene (2) zu befestigen.

7. Verriegelungsbolzen nach Anspruch 5 oder 6,
wobei der zweite Stromleiter (8) ein drittes Ende aufweist;
wobei das dritte Ende ausgebildet ist, einen Verbraucher (30) anzuschließen.

8. Verriegelungsbolzen nach Anspruch 7, wobei an dem dritten Ende ein Kontaktstift (56) ausgebildet ist.

9. Verriegelungsbolzen nach Anspruch 7 oder 8, wobei das dritte Ende als Sechskant ausgebildet ist.

10. Verfahren zum Montieren eines Monuments an einem Stromverteilungssystem zur elektrischen Versorgung von schienenmontierten Monumenten in einem Flugzeug, umfassend folgende Schritte:
Positionieren eines Klemmbeschlages (4), der ein Gewinde (52) aufweist, an der Montageposition eines Monuments (22) in einer Sitzschiene (2), die einen ersten Stromleiter (24) umfasst;
Verbinden des Monuments (22) mit dem Klemmbeschlag (4) mittels eines Verriegelungsbolzens (28), der ein Gewinde (14) zum Eindrehen in den Klemmbeschlag (4) sowie einen zweiten Stromleiter (8) aufweist;
Anbringen des Monuments an der Sitzschiene (2) mittels Klemmbeschlag (4) und Verriegelungsbolzen (28) durch Pressen;
Verklemmen des Klemmbeschlages (4) mit der Sitzschiene (2);
Durchstoßen einer Isolierung (26) eines ersten Stromleiters (24) mit einer Spitze (6) am Ende des zweiten Stromleiters (8); wobei die Isolierung die gesamte Oberfläche des ersten Stromleiters (24) umgibt;
Kontaktieren des ersten Stromleiters (24) mit dem zweiten Stromleiter (8), wenn die Spitze (6) die Isolierung (26) des ersten Stromleiters (24) durchdringt, wenn sich die Spitze (6) bei Verriegelung in die Richtung der Isolierung (26) des ersten Stromleiters (24) bewegt;
Anschließen eines Verbrauchers (30) an dem zweiten Stromleiter (8);
Verbinden des Verbrauchers (30) mit einem dritten Stromleiter (3).

11. Verfahren zum Demontieren eines Monuments von einem Stromverteilungssystem nach einem der Ansprüche 1 bis 3 zur elektrischen Versorgung von schienenmontierten Monumenten in einem Flugzeug, umfassend folgende Schritte:
Lösen der Verbindung des Verriegelungsbolzens (28) mit dem Klemmbeschlag (4);
Trennen des ersten Stromleiters (24) von dem zweiten Stromleiter (8);
Trennen des Monuments (22) vom Klemmbeschlag (4) und Verbindungsbolzen (28);
Verfüllen eines entstandenen Lochs in der Isolierung (26) mit Isoliermaterial.

## Claims

1. A power distribution system for supplying a rail-mounted monument in an aircraft with electric power, comprising:
a seat rail (2);
a clamping fixture (4) with a thread (52);
a locking bolt (28) with a thread (14) to screw into the clamping fixture (4);
wherein the seat rail (2) comprises a first conductor (24);
wherein the first conductor (24) comprises an insulation (26) surrounding a whole surface of the first conductor (24); and
wherein the insulation (26) is arranged between the first conductor (24) and the seat rail (2);
wherein the clamping fixture (4) is provided for being mounted by pressing at a selected location on and along the seat rail (2) by the locking bolt (28);
wherein the locking bolt (28) comprises a second conductor (8);
wherein the second conductor (8) is provided for contacting the first conductor (24);
wherein the second conductor (8) has a first end;
wherein the first end has a point (6);
wherein the point (6) protrudes from a second end of the locking bolt (28); and
wherein the point (6) is provided for piercing the insulation (26) of the first conductor (24), when the point (6) moves towards the insulation (26) of the first conductor (24) while locking.

2. The power distribution system of claim 1, wherein the locking bolt (28) is provided for installing the monument (22) on the seat rail (2).

3. The power distribution system of claim 1 or 2,
wherein the second conductor (8) has a third end;
wherein the third end (56) is provided for connecting the second conductor (8) to a consumer.

4. Seat rail for a power distribution system for supplying a rail-mounted monument in an aircraft with electric power of claims 1 to 3,
wherein a first conductor (24) is integrated into the seat rail (2);
wherein the seat rail (2) has symmetrical hook-shaped elevations (58) on its surface;
wherein the first conductor (24) has an insulation (26) surrounding the whole surface of the first conductor (24) and the first conductor (24) is intended to be pierced by a point (6) of a second conductor (8) of a locking bolt (28), wherein the first conductor (24) contacts the second conductor (8), when the point (6) is pushed against the first conductor (24);
wherein the insulation (26) is located between the first conductor (24) and the seat rail (2);
wherein the first conductor (24) has four rectangular formed reference planes;
wherein two reference planes each are wider than the other two reference planes;
wherein the first conductor (24) and the insulation (26) are integrated in the seat rail (2) with the surface of the insulation (26) being at the same level as the surface of the seat rail (2); and
wherein the first conductor (24) and the insulation (26) are arranged in such a way that at the surface of the seat rail (2) one of the wider boundary planes of the first conductor (24) is located.

5. Locking bolt for clamping a clamping fixture (4) having a thread (52) to a seat rail (2) of claims 4 or 5 by pressing, comprising a first conductor (24) having an insulation (26) surrounding the whole surface of the first conductor (24),
wherein the locking bolt (28) has a thread (14) to screw to the clamping fixture (4) to a seat rail (2);
wherein the locking bolt (28) comprises a second conductor (8);
wherein the second conductor (8) is provided for contacting the first conductor (24);
wherein the second conductor (8) has a first end;
wherein the first end is formed as a point (6);
wherein the point (6) protrudes from a second end of the locking bolt (28); and
wherein the point (6) being operable to pierce the insulation (26) of the first conductor (24), when the point (6) moves towards the insulation (26) of the first conductor (24) while locking.

6. Locking bolt of claim 5, wherein the locking bolt (28) is provided for connecting a monument (22) to a seat rail (2).

7. Locking bolt of claim 5 and 6,
wherein the second conductor (8) has a third end;
wherein the third end is provided for connecting the second conductor (8) to a consumer (30).

8. Locking bolt of claim 7, wherein a contact pin (56) is formed at the third end

9. Locking bolt of claim 7 or 8, wherein the third end is formed as a hexagon.

10. A method of connecting a monument to a power distribution system for supplying rail-mounted monuments in an aircraft with electric power, the method comprising the steps of:
positioning a clamping fixture (4) having a thread (52) at a location at which a monument (22) should be installed on a seat rail (2) having a first conductor (24);
connecting the monument (22) to the clamping fixture (4) by a locking bolt (28) having a thread (14) to screw into the clamping fixture (4) and a second conductor (8);
mounting the monument (22) on the seat rail (2) by the clamping fixture (4) and the locking bolt (28);
clamping the clamping fixture (4) to the seat rail (2);
piercing an insulation (26) of a first conductor (24) with a point (6) at the end of the second conductor, wherein the insulation (26) surrounds the whole surface of the first conductor (24)
connecting the first conductor (24) with the second conductor (8);
when the point (6) pierces the insulation (26) of the first conductor (24),
when the point (6) moves towards the insulation (26) of the first conductor (24) while locking;
connecting a consumer (30) to the second conductor (8)
connecting the consumer (30) to the third conductor (3).

11. A method for disconnecting a monument from a power distribution system for supplying rail-mounted monuments in an aircraft with electric power of the claims 1 to 3, the method comprising the steps of:
separating a connection between a locking bolt (28) and a clamping fixture (4);
disconnecting a first conductor (24) from the second conductor (8);
separating the monument (22) from the clamping fixture (4) and the locking bolt (28); and
filling a pierced hole created in an insulation (26) with insulating material.

## Revendications

1. Système de distribution de courant pour l'alimentation électrique d'une structure montée sur un rail dans un avion, comprenant :
un rail de siège (2) ;
une ferrure de serrage (4) comportant un taraudage (52) ;
un boulon de verrouillage (28) comportant un filetage (14) à visser dans la ferrure de serrage (4) ;
dans lequel le rail de siège (2) comprend un premier conducteur de courant (24) ;
dans lequel le premier conducteur de courant (24) présente une isolation (26) qui entoure la totalité de la surface du premier conducteur de courant (24) ; et
dans lequel l'isolation (26) est disposée entre le premier conducteur de courant (24) et le rail de siège (2) ;
dans lequel la ferrure de serrage (4) est agencée pour être fixée par enfoncement au moyen du boulon de verrouillage (28) au niveau du rail de siège (2) ;
dans lequel le boulon de verrouillage (28) comprend un second conducteur de courant (8) ;
dans lequel le second conducteur de courant (8) est agencé pour entrer en contact avec le premier conducteur de courant (24) ;
dans lequel le second conducteur de courant (8) présente une première extrémité ;
dans lequel la troisième extrémité (6) est réalisée sous forme de pointe (6) ;
dans lequel la pointe (6) fait saillie au-delà d'une seconde extrémité du boulon de verrouillage (28) ; et
dans lequel la pointe (6) est agencée pour pénétrer l'isolation (26) du premier conducteur de courant (24) lorsque la pointe (6) se déplace lors de la fixation en direction de l'isolation (26) du premier conducteur de courant (24).

2. Système de distribution de courant selon la revendication 1, dans lequel le boulon de verrouillage (28) est agencé pour monter une structure (22) sur un rail de siège (2).

3. Système de distribution de courant selon la revendication 1 ou 2,
dans lequel le second conducteur de courant (8) présente une troisième extrémité ;
dans lequel la troisième extrémité (56) est agencée pour raccorder un consommateur.

4. Rail de siège pour un système de distribution de courant pour l'alimentation électrique d'une structure montée sur un rail dans un avion selon l'une des revendications 1 à 3,
dans lequel un premier conducteur de courant (24) est intégré dans le rail de siège (2) ;
dans lequel le rail de siège (2) présente au niveau de sa surface des élévations (58) symétriques en forme de crochet ;
dans lequel le premier conducteur de courant (24) présente une isolation (26) qui entoure la totalité de la surface du conducteur de courant et qui peut être perforée par la pointe (6) d'un second conducteur de courant d'un boulon de verrouillage, de telle sorte que le premier conducteur de courant peut venir en contact avec le second conducteur de courant lorsque la pointe (6) appuie par pression contre le premier conducteur de courant (24) ;
dans lequel l'isolation (26) est disposée entre le premier conducteur de courant (24) et le rail de siège (2) ;
dans lequel le conducteur de courant (24) présente une configuration rectangulaire comportant quatre surfaces de référence ;
dans lequel deux des quatre surfaces de référence sont plus larges que les deux autres ;
dans lequel le conducteur de courant (24) est intégré conjointement avec l'isolation (26) dans le rail de siège (2), de telle manière que la surface de l'isolation (26) se situe sur le même plan que la surface du rail de siège (2) ; et
dans lequel le conducteur de courant (24) et son isolation (26) sont disposés de telle manière qu'une des surfaces de référence plus larges du conducteur de courant (24) se situe au niveau de la surface du rail de siège (2).

5. Boulon de verrouillage pour la fixation d'une ferrure de serrage (4) par enfoncement, qui présente un taraudage (52), au niveau d'un rail de siège (2) selon la revendication 4 ou 5, qui comprend un premier conducteur de courant (24) qui présente une isolation (26) qui entoure la totalité de la surface du premier conducteur de courant (24),
dans lequel le boulon de verrouillage (28) présente un filetage (14) à visser dans la ferrure de serrage (14) ;
dans lequel le boulon de verrouillage (28) comprend un second conducteur de courant (8) ;
dans lequel le second conducteur de courant (8) est acencé pour entrer en contact avec un premier conducteur de courant (24) ;
dans lequel le second conducteur de courant (8) présente une première extrémité ; dans lequel la première extrémité est réalisée sous forme de pointe (6) ;
dans lequel la pointe (6) fait saillie au-delà d'une seconde extrémité du boulon de verrouillage (28) ; et
dans lequel la pointe (6) est acencée pour pénétrer l'isolation (26) du premier conducteur de courant (24) lorsque la pointe se déplace lors du verrouillage en direction de l'isolation (26) du conducteur de courant (24).

6. Boulon de verrouillage selon la revendication 5, dans lequel le boulon de verrouillage (28) est acencé pour fixer une structure (22) sur un rail de siège (2).

7. Boulon de verrouillage selon la revendication 5 ou 6,
dans lequel le second conducteur de courant (8) présente une troisième extrémité ; dans lequel la troisième extrémité est acencée pour raccorder un consommateur (30).

8. Boulon de verrouillage selon la revendication 7, dans lequel une broche de contact (56) est acencée au niveau de la troisième extrémité (56).

9. Boulon de verrouillage selon la revendication 7 ou 8, dans lequel la troisième extrémité est réalisée sous forme de six pans.

10. Procédé de montage d'une structure au niveau d'un système de distribution de courant pour l'alimentation électrique de structures montées sur un rail dans un avion, comprenant les étapes suivantes consistant à :
positionner une ferrure de serrage (4) qui présente un taraudage (52) au niveau de la position de montage d'une structure (22) dans un rail de siège (2) qui comprend un premier conducteur de courant (24) ;
relier la structure (22) à la ferrure de serrage (4) au moyen d'un boulon de verrouillage (28) qui présente un filetage (14) à visser dans la ferrure de serrage (4) ainsi qu'un second conducteur de courant (8) ;
monter la structure sur le rail de siège (2) au moyen de ferrure de serrage (4) et
boulon de verrouillage (28) par enfoncement ;
bloquer la ferrure de serrage (4) avec le rail de siège (2) ;
perforer une isolation (26) d'un premier conducteur de courant (24) avec une pointe (6) à l'extrémité du second conducteur de courant (8), l'isolation entourant la totalité de la surface du premier conducteur de courant (24) ;
mettre le premier conducteur de courant (24) en contact avec le second conducteur de courant (8) lorsque la pointe (6) pénètre l'isolation (26) du premier conducteur de courant (24) lorsque la pointe (6) se déplace lors du verrouillage en direction de l'isolation (26) du premier conducteur de courant (24) ;
raccorder un consommateur (30) sur le second conducteur de courant (8) ;
relier le consommateur (30) à un troisième conducteur de courant (3).

11. Procédé destiné à démonter une structure d'un système de distribution de courant selon l'une des revendications 1 à 3, pour l'alimentation électrique de structures montées sur un rail dans un avion, comprenant les étapes suivantes consistant à :
libérer la liaison du boulon de verrouillage (28) avec la ferrure de serrage (4) ;
séparer le premier conducteur de courant (24) du second conducteur de courant (8) ;
séparer la structure (22) de la ferrure de serrage (4) et du boulon de verrouillage (28) ;
remplir un trou s'étant formé dans l'isolation (26) avec du matériau isolant.
